# EUROPEAN PATENT APPLICATION

(11) **EP 0 901 845 A1**
(43) Date of publication of application: **17.03.1999**
(21) Application number: 98203007.4
(22) Date of filing: 10.09.1998
(51) Int. Cl.: B09C 1/06, B09B 3/00

(54) **Device for removing one or more pollutions from bulk material**

(30) Priority: 10.09.1997 NL 1006990
(71) Applicant: Recycling Nederland K.W.S.D. B.V., 3474 LB Zegveld (NL)
(72) Inventor: Blonk, Dirk Jan, 3474 LB Zegveld (gem. Woeren) (NL)
(74) Representative: De Hoop, Eric

(57) **Abstract**

Device for removing one or more pollutions from a bulk material. The device comprises a treatment chamber (16) for treating polluted bulk material therein, supply means (6,6') for supplying bulk material to the treatment chamber (16), discharge means (27) for discharging bulk material from the treatment chamber (16), the supply (6,6') and discharge means (27) each comprising a rotatable, substantially helical body, the helical body containing a hollow axle, evacuating means (4) for evacuating the treatment chamber, heating means (3) for heating the bulk material in the treatment chamber. The treatment chamber unit (5) contains the treatment chamber (16) which is formed by three rows (17,18,19) of a number of adjacently situated double-walled pipes (20), which rows are placed above one another, each pipe (20) containing a screw conveyor (21) for conveying the bulk material in a conveyance direction (17',18',19'). The conveyance direction of the screw conveyors (21) belonging to one row of pipes is mutually the same, and the conveyance direction (17') of the screw conveyors (21) belonging to the middle row of pipes (20) is opposite to the conveyance direction (19') of the screw conveyors (21) belonging to the other rows (19) of pipes (20).

## Description

The present invention relates to a device for removing one or more pollutions from a bulk material comprising:
- a treatment chamber for treating polluted bulk material therein,
- supply means for supplying bulk material to the treatment chamber,
- discharge means for discharging bulk material from the treatment chamber, the supply and discharge means each comprising a rotatable, substantially helical body, the helical body containing a hollow axle,
- evacuating means for evacuating the treatment chamber,
- heating means for heating the bulk material in the treatment chamber.

Such a device is known from the Dutch patent application 91.01802. This device contains heating means which by means of induction generate heat, whereas the treatment chamber comprises a rotatable container for bulk material. Generally this known device is operative at a high temperature and at a very low air pressure, which provides a very good action for removing pollutions from bulk material. However, the polluted bulk material has to be transported from the polluted location to this known device, which entails unnecessary costs particularly with less serious pollutions.

There is a need for a device which on the spot can cleanse the polluted bulk material to high extent and which can quickly be brought into action, as a result of which among others transportation costs of bulk material are reduced.

It is an objective of the present invention to provide a device for removing pollutions from bulk material which can be brought into action quickly and on the spot.

For that purpose a device of the kind mentioned in the preamble according to the invention is characterized in that the device is mobile and contains a heating unit, an evacuation unit, a treatment chamber unit, an energy generating unit, an hydraulic unit, a process control unit, and a cooling unit, the units being mutually operatively connectable, the heating unit contains the heating means, which are formed by a thermal oil-fired boiler, a thermal oil pump and an expansion tank, the treatment chamber unit contains the treatment chamber, which is formed by three rows of a number of adjacently situated double-walled pipes, which rows are placed above one another, each pipe containing a screw conveyor for conveying the bulk material in a conveyance direction, the conveyance direction of the screw conveyors belonging to one row of pipes being mutually the same, and the conveyance direction of the screw conveyors belonging to the middle row of pipes being opposite to the conveyance direction of the screw conveyors belonging to the other row of pipes, a crushing mill being provided at the end of the first row of pipes and a pulverizing mill being provided at the end of the second row of pipes as seen in the conveyance direction, the treatment chamber unit further being provided with a filter unit and a condenser unit which are connected to the end of the third row of pipes, and the screw conveyors being driven by a hydraulic unit. Because the treatment chamber is formed by three pipes located above one another, which in themselves are stationary and in which the bulk material is transported through the pipes by screw conveyors, a compact construction is obtained which can be transported and in which the way the bulk material has to go is sufficiently long for efficient removal of pollutions. By using heating by means of oil, as high a temperature as in induction heating can indeed not be obtained, but the construction on the other hand becomes sufficiently compact to be transportable. The temperatures to be reached are sufficient however, to completely remove certain milder kinds of pollution and in more serious pollutions to obtain a sufficient pre cleansing because of which the quantity of pre-cleansed bulk material to be transported which is to be additionally cleansed may be strongly reduced. Particularly as a result of the transportability of the heating unit and the treatment chamber unit the entire device can be made mobile because of which a cleansing of bulk material on the spot is possible.

An embodiment of the device according to the invention is characterized in that the supply means contain an alternating working supply system with two alternating closable supply bunkers. As a result of this the device can be continuously operative the bulk material being supplied discontinuously, and a closing of the device can also be realized which makes generating sufficient evacuation possible.

A further preferred embodiment of the device according to the invention is characterized in that each of the supply bunkers is provided with detectors for the level of the bulk material. In this way the bunker can be opened when the bulk material in a supply bunker has reached the desired level in order to feed the bulk material into the pipes of the first row.

Preferably the supply bunkers are closable by means of a pivotable stop valve which can be moved by two pairs of cylinders situated opposite one another. As the stop valve has to extend over the entire width of the row, this construction ensures that the stop valve does not give way unwantedly.

In a further embodiment of a device according to the invention the filter unit contains an upright filter casing with a cross-section that increases from bottom to top and is provided with baffle plates for filtering the gasses that are conveyed to the condenser unit. In this way a mechanical filter unit is provided which does not use parts which need regular servicing or replacement, such as for instance a filtering cloth.

An optimum heating of the bulk material by the thermal oil is obtained when each of the screw conveyors is provided with a hollow axle, and when the hollow axle of each screw conveyor and of each double walled pipe the space between the double walls is connected to the heating unit for conveying oil in a direction opposite to the conveyance direction.

Preferably the evacuation unit contains two evacuation pumps, so that the evacuation to be obtained can be adjusted for different kinds of bulk material to be cleansed.

A further preferred embodiment of the device according to the present invention is characterized in that the number of pipes in each row is ten, and the hydraulic unit contains five hydro engines, each hydro engine driving six screw conveyors, two in each row, the pairs of screw conveyors driven by one hydro engine being situated above one another. This number of pipes appeared to give an economically sufficient capacity for all kinds of polluted bulk materials. Additionally hydro engines in comparison to other known driving systems appear to have the surprising advantage that not only do they have high efficiency at a lower number of revolutions when driving the screw conveyors, but they also provide better adjustments of the number of revolutions. Moreover it is possible in this way that one hydro engine drives several screw conveyors, because of which the number of hydro engines and as a result of that the necessary space remains limited.

When the cooling unit is provided with a heat exchange unit, the generated noise remains limited, because of which the device in nearly all cases complies with the sound level standards to be allowed to be operative 24 hours a day.

A further embodiment of the device according to the present invention is characterized in that the process control unit is suitable for regulating the temperature of the oil, for regulating the evacuation level, for regulating the rotation speed of the screw conveyors, for regulating the adjustment of the level detectors for the bulk material and for regulating the heat exchange unit. Preferably the process control unit is remote controllable. In this way the device can be controlled without specialistic and expensive operators being present daily. Also the business parameters which depend on the kind of bulk material and the kind of pollution can be remote adjusted.

Some exemplary embodiments of the device for removing one or more pollutions from a bulk material according to the present invention, will by way of example be elucidated on the basis of the drawing, in which:
Figure 1 shows a schematic top view of the mobile device on two trailers according to the present invention,
Figure 2A shows a schematic side view of one of the trailers of figure 1, with on it the heating unit, the evacuation unit and the treatment chamber unit,
Figure 2B shows a schematic end view of figure 2A, in which the supply bunkers are left out for the sake of clarity,
Figure 3 shows a schematic side view of the other trailer of figure 1, with on it the other units of the device according to the invention,
Figure 4A shows a schematic end view of the treatment chamber according to the invention,
Figure 4B shows a schematic top view of the treatment chamber according to the invention,
Figure 4C shows a schematic end view of the treatment chamber according to the invention, for elucidating the driving of the screw conveyors by the hydro engines,
Figure 5 shows a schematic view of a screw conveyor to be used in a device according to the invention,
Figure 6 shows a schematic cross-section of a supply or discharge bunker of a device according to the present invention,
Figure 7A shows a schematic view of a crushing mill of a device according to the present invention,
Figure 7B shows a schematic end view of figure 7A,
Figure 8A and Figure 8B show a schematic view of a pulverizing mill of a device according to the present invention,
Figure 9 shows a schematic cross-section of a mechanical filter unit of a device according to the present invention,
Figure 10 shows a schematic diagram of the mutual connection of the units of a device according to the present invention.

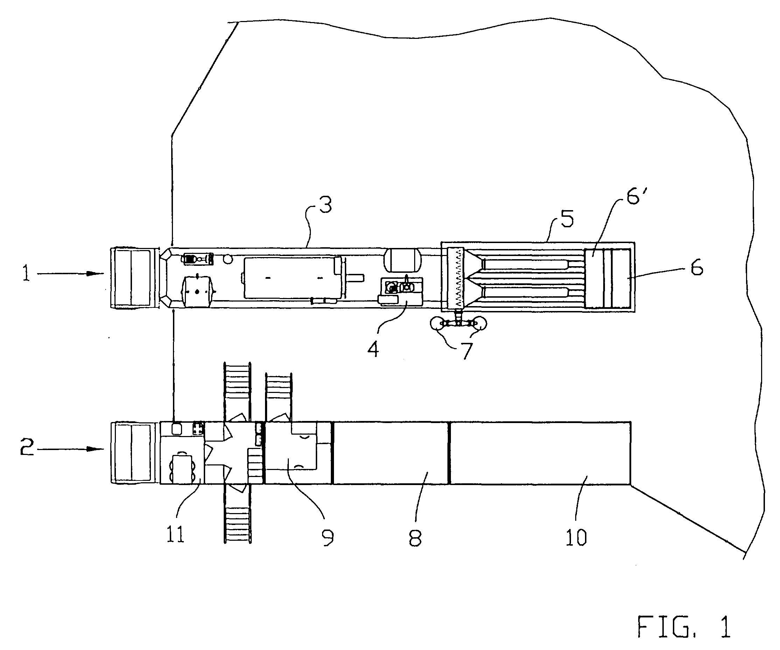

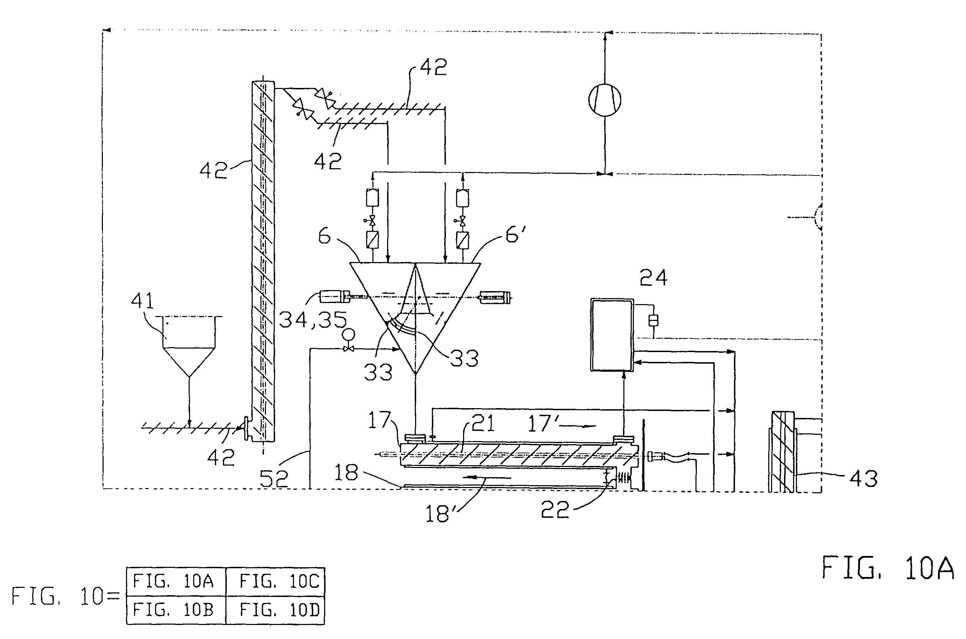

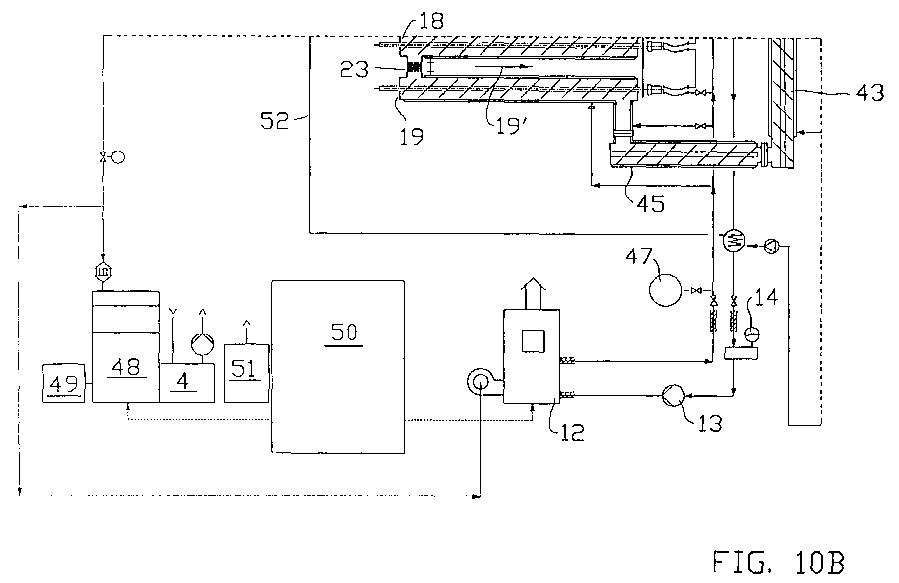

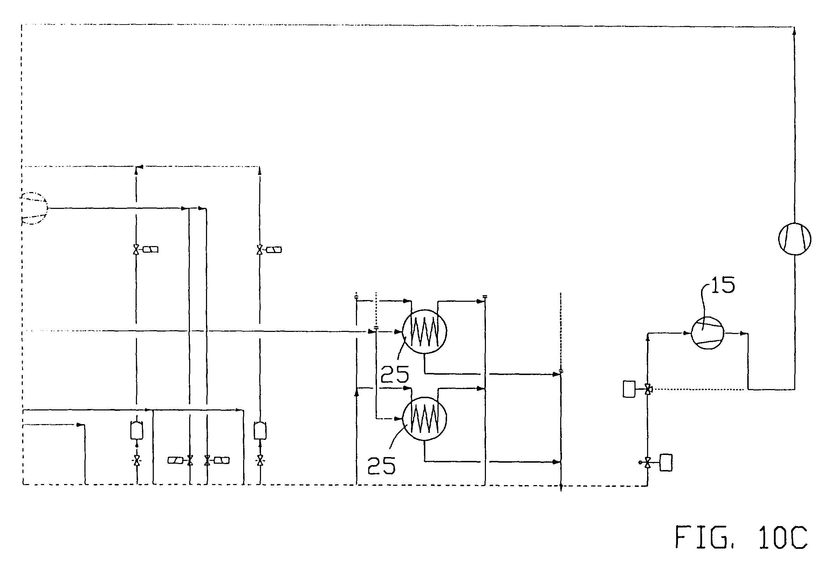

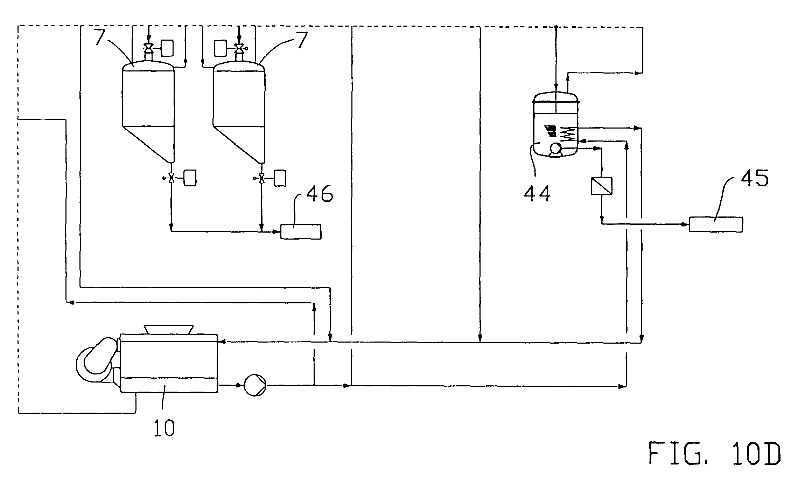

Figure 1 shows a schematic top view of a mobile device on two trailers 1, 2 according to the present invention, as it could be lined up on the spot at a working area. The trailer 1 contains a heating unit 3, a evacuation unit 4, and a treatment chamber unit 5 with two supply bunkers 6, 6'. Next to the trailer 1 a storage silo 7 has been placed for the cleansed end product. The second trailer 2 contains an energy generating unit, a hydraulic unit placed in unit 8, a process control unit 9, and a cooling unit 10. Furthermore the second trailer may contain a part 11 for possible personnel. This division of the units over two trailers appears, as regards space, to be an ideal division. Operative the units on the two trailers are mutually operatively connected which for the sake of clarity is not shown in figure 1. For the mutual connections figure 10 is referred to.

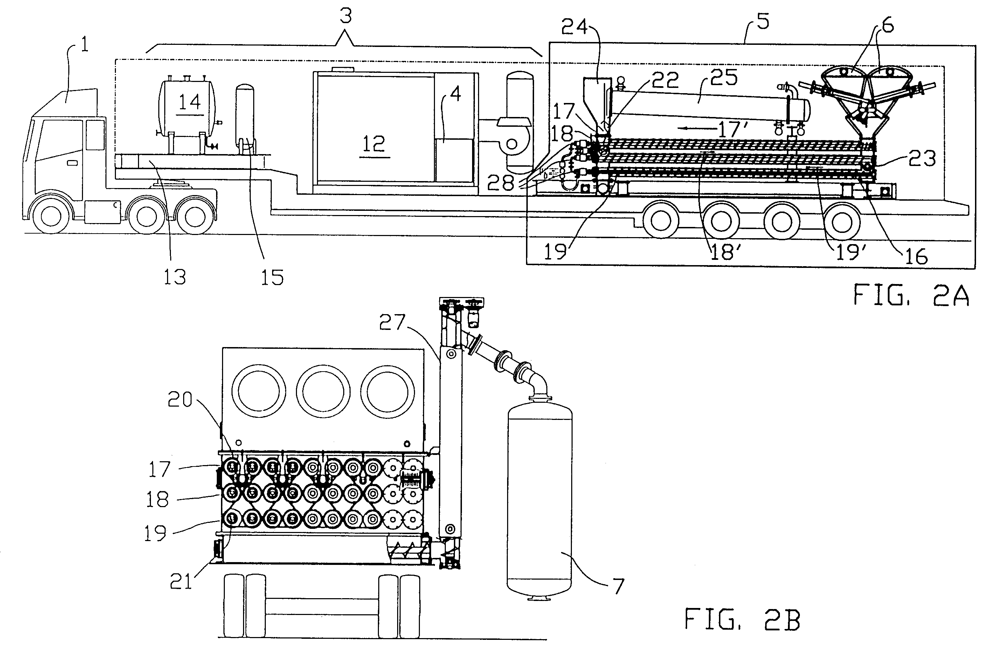

In figure 2A a schematic side view is shown of the trailer 1 of figure 1, with on it the heating unit 3, the evacuation unit 4 and the treatment chamber 5.

The heating unit 3 contains the heating means, which are formed by a thermal oil-fired boiler 12, a thermal oil pump 13 and an expansion tank 14. Furthermore the heating unit may contain a combined degassing/cooling pot 15. The heating unit 3 may supply thermal oil up to a temperature of approximately 400°C. The oil pump 13 pumps the thermal oil under a pressure of for instance 6 bars through the parts concerned of the device. In this way not only a sufficient flow of the oil is obtained for heating the bulk material, but also the life span of the thermal oil is extended.

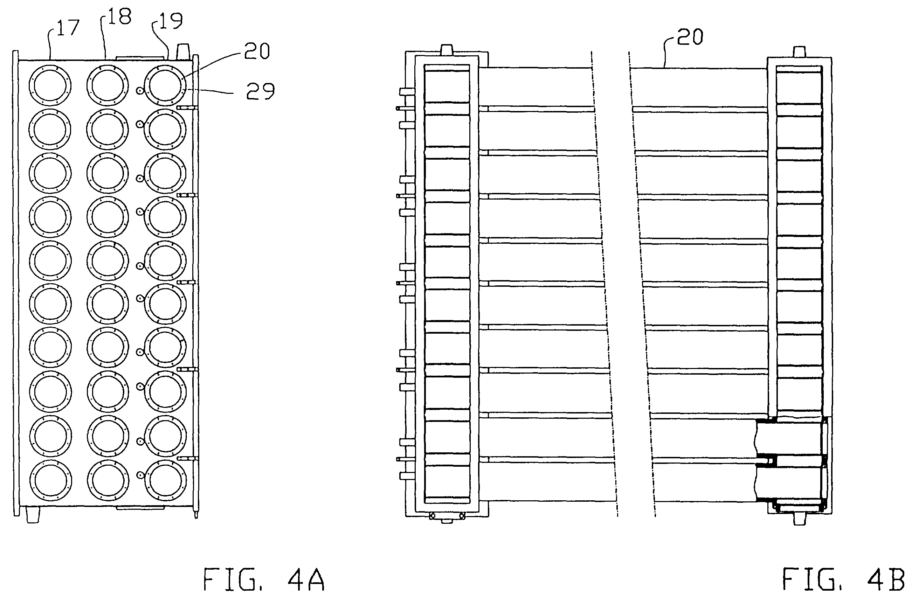

The treatment chamber unit 5 contains a treatment chamber 16 which is formed by three rows 17, 18, 19 of a number of adjacently situated double-walled pipes 20 (figures 2B, 4A-C), which rows are placed above one another. In each pipe 20 a screw conveyor 21 is placed for conveying bulk material in a conveyance direction 17', 18', 19'. The conveyance direction of the screw conveyors 21 belonging to one row of pipes is mutually the same, and the conveyance direction 17' of the screw conveyors 21 belonging to the first row of pipes 20 is the same as the conveyance direction 19' of the screw conveyors 21 belonging to the third row 19 of pipes 20. The conveyance direction 18' of the screw conveyors 21 belonging to the middle row of pipes 18 is opposite to the conveyance direction of the screw conveyors 21 belonging to the other row of pipes 20. A crushing mill 22 is provided at the end of the first row 17 of pipes 20 and a pulverizing mill 23 is provided at the end of the second row 18 of pipes 20 as seen in the conveyance direction, both for reducing and pulverizing the lumps or waste products of bulk material.

The treatment chamber unit 5 is furthermore provided with a filter unit 24 and a condenser unit 25 which are connected to the end of the third row 19 of pipes 20. In this way the device works emission free and all gasses that are released are received and burned in the thermal oil-fired boiler. Gasses that are not condensable are, by means of a pipeline and non-return valves, reducing valves and flame extinguishers, directly injected and burned in the flame of the thermal oil-fired boiler. The screw conveyors 21 are driven via their driving shafts 28 by the hydraulic unit 8 in a manner which is elucidated below.

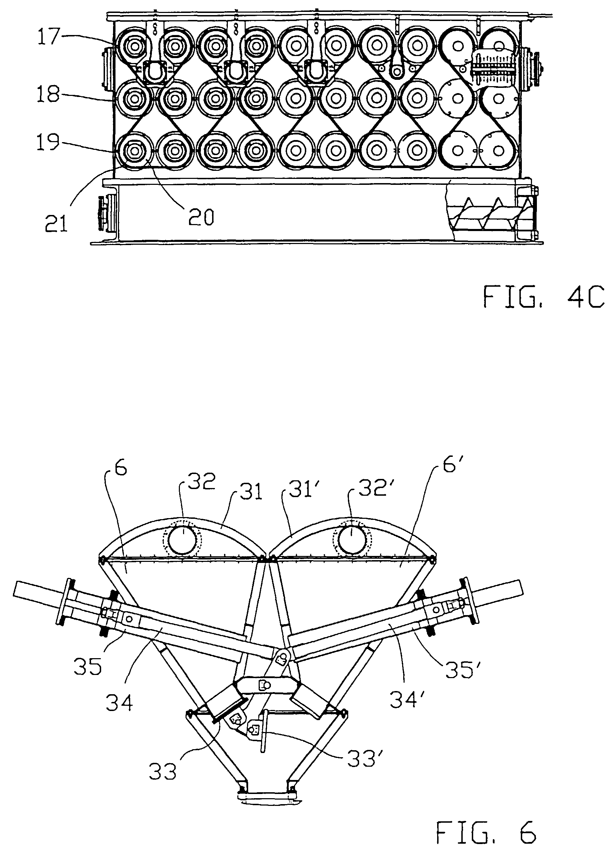

The bulk material is supplied via the two supply bunkers 6, 6', of which the construction will be elucidated on the basis of figure 6. The quantity of treated bulk material coming from the treatment chamber 16 is discharged to the storage silo 7 (see figure 2B) via the discharge means 27, which for instance contain screw conveyors.

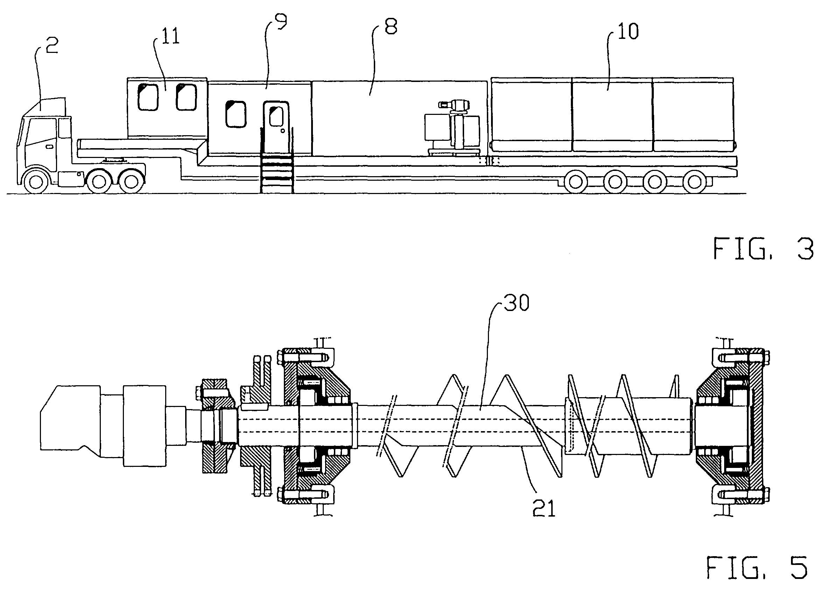

Figure 3 shows a schematic side view of the trailer 2 of figure 1, with the other units according to the invention on it.

Figure 5 shows a schematic view of the screw conveyor 21 to be used in a device according to the invention. Each of the screw conveyors 21 is provided with a hollow axle 30. The hollow axle 30 of each screw conveyor 21 and the space 29 of each double-walled pipe 20 (see figure 4A) are connected to the heating unit 3 for conveying oil in a direction opposite to the conveyance direction concerned.

A sufficient processing capacity for all kinds of bulk material to be treated is obtained when a number of pipes 20 in each row 17, 18, 19 is ten (figure 4). The hydraulic unit 8 contains five hydro engines. With respect to other known driving systems the hydro engines appear to have the surprising advantage that not only do they have high efficiency at a lower number of revolutions when driving the screw conveyors, but they also provide a better adjustment of the number of revolutions. Moreover it is possible in this way that one hydro engine drives several screw conveyors 21 in the manner shown in figure 4C, because of which the number of hydro engines and as a result of that the necessary space remains limited. In this way each hydro engine drives six screw conveyors, two in each row, the pairs of screw conveyors driven by one hydro engine being situated above one another.

Figure 6 is a schematical cross-section of the supply means of a device according to the present invention. The supply means contain an alternating working supply system with two alternating closable supply bunkers 6, 6'. Each of the supply bunkers 6, 6' is closed by a cap 31, 31' in which a supply opening 32, 32' is situated. Said supply openings 32, 32' may for instance connect to the supplying screw conveyors such as will be described on the basis of figure 10. Each of the supply bunkers 6, 6' is provided with detectors (not shown) for the level of the bulk material. In this way, when the bulk material has reached the desired level in a supply bunker 6, 6', this bunker can be opened in order to feed the bulk material into the pipes of the first row. The supply bunkers 6, 6' can be closed alternatingly by means of a pivotable stop valve 33, 33' which can be moved by two pairs of cylinders 34, 35; 34', 35' situated opposite one another. As the stop valve 33, 33' has to extend over the entire width of the row, this double cylinder construction ensures that the stop valve 33, 33' does not give way unwantedly. Moreover this construction provides the possibility to sufficiently close the entire device in order to generate and maintain a sufficiently low pressure in the treatment chamber.

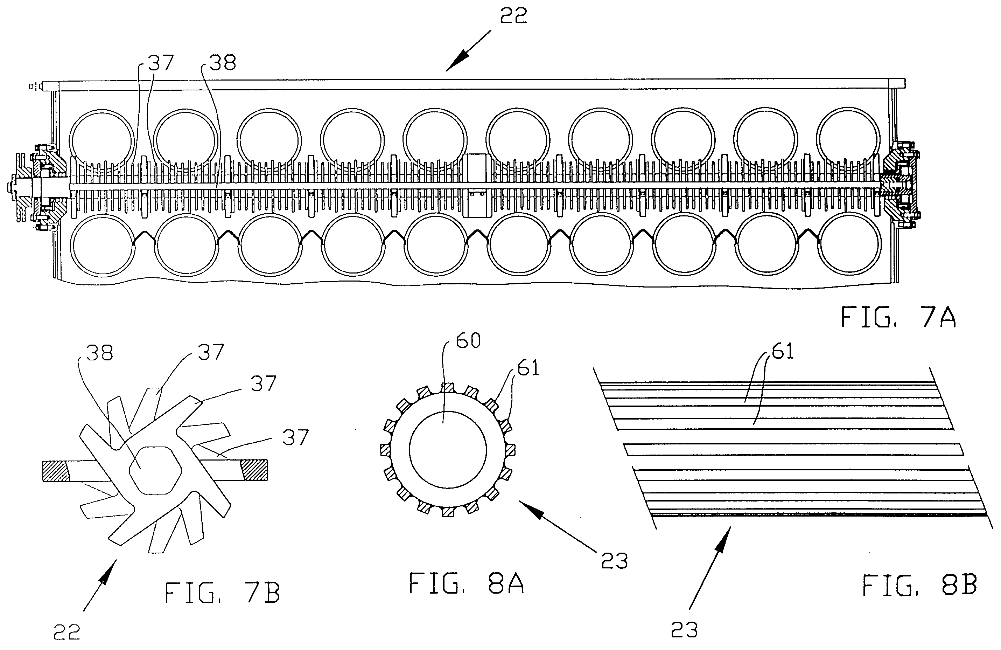

Figures 7A and 7B show schematic views of the crushing mill 22 of a device according to the present invention. The crushing device 22 contains a large number of plates 37 with finger-like protrusions, which plates are placed on a rotatable axle 38. The crushing mill ensures that lumps of bulk material, or waste products of bulk material resulting from heating, are reduced because of which the removal of pollutions can take place better.

Figures 8A and 8B show schematic views of the pulverizing mill 23 of the device according to the present invention. The pulverizing mill 23 in this example contains a number of elongated protrusions 61 which are mounted on a rotatable axle 60. The elongated protrusions 61 can extend uninterruptedly over the entire length of the axle 60, however in another embodiment they may be interrupted.

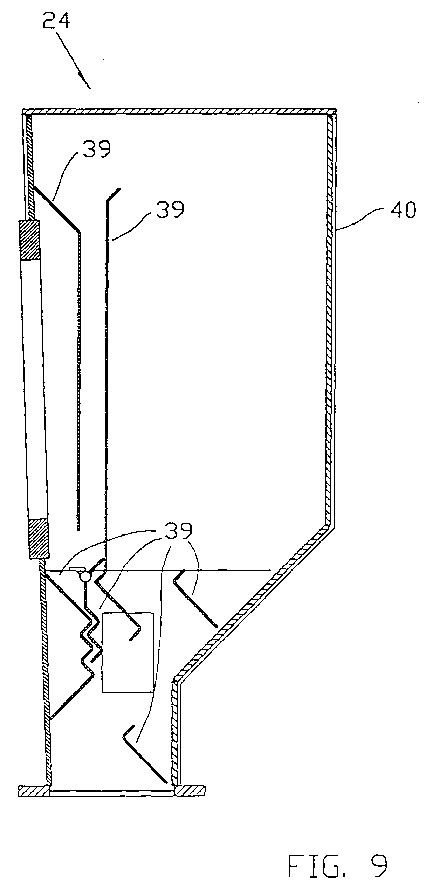

Figure 9 is a schematic cross-section of the mechanical filter unit 24 of the device according to the present invention. The filter unit 24 comprises an upright filter casing 40 with a cross-section that increases from bottom to top and is provided with a number of baffle plates 39 for filtering the gasses that are conveyed to the condenser unit. In this way a mechanical filter unit is provided which does not use parts which need regular servicing or replacement, such as for instance a filtering cloth. Larger materials filtered from the gasses can be guided back into the treatment chamber to be treated again, whereas the gasses guided to the condenser unit are condensed to a small volume there and if necessary be conveyed for re-use or for further cleansing.

Figure 10 shows a schematic diagram of the mutual connection of the units of the device according to the present invention. The polluted soil, possibly after sifting, is brought into a receiving funnel 41, from which it is conveyed via supplying screw conveyors 42 and fall pipes to the supply bunkers 6, 6'. When one of the supply bunkers, in the case shown bunker 6, is sufficiently filled, which is detected by the level detectors, the bunker 6 is opened by moving the valve 33 of the left hand side position to the right hand side position in which it closes the other supply bunker 6'. The polluted soil then goes from the supply bunker 6 to the first row 17 of pipes of the treatment chamber and is then guided through the treatment chamber by a screw conveyor, the soil passing the crushing mill 22 and the pulverization mill 23. The quantity of soil allowed in is regulated such that each pipe is approximately filled halfway with soil. The evacuation unit 4 is driven by diesel aggregate 48, the generator 49 and compressor 51 ensure that a low pressure prevails in the pipes. In the case shown the connection to the evacuation unit is realized in the fall pipes. Depending on the capacity of the evacuation pump the pressure may be adjusted, in which when using two evacuation pumps, for instance an evacuation pump with a capacity of 400m³ and an evacuation pump with a capacity of 2000m³, a pressure of 0.5 mbars can be reached.

The polluted soil is heated in the treatment chamber by means of oil which is conveyed via the oil-fired boiler 12 and oil pump 13 through the hollow axles of the screw conveyors 21 and in the space of the double-walled pipes. The flow of the oil here preferably is opposite to the conveyance direction 17', 18', 19' of the row of pipes concerned. Preferably the oil is introduced in the device under pressure, so as to be able to realize a better regulation of the heating. For that purpose a means 47 is provided, which for instance puts nitrogen generated under a pressure of 6 bars on the oil pipes.

The gasses released from the soil go to the condenser unit 25 via the filter unit 24 and are received in the condense tank 44, after which a possible further treatment or re-use 45 follows. For cooling the parts of the device and the condensing of the released gasses, use is made of the cooling unit 10.

Soil coming from the treatment chamber is transferred to the storage silo 7 via discharging screw conveyor 43, after which the finally cleansed soil 46 can be re-used or transported.

Possibly steam 52 could be injected in the supply bunkers 6, 6' to pre-treat the polluted soil.

The energy for driving the units of the device is provided by the diesel aggregate 48 and the generator 49, in which the diesel aggregate 48 is fed by a diesel supply 50.

From examination tests it appeared that the mobile device according to the present invention is capable to sufficiently cleanse soil polluted with among others ftalats, fluorescent powder, petrol and the like and natural gas production sludge, in which the cleansed soil does not show colouring or undergoes a change of structure. Depending on the soil and the kind of pollution the adjustments of the device can be remote adjusted by the process control unit, such that within a relatively short time the device can be switched to another kind of soil/pollution. It was also established through these examinations that in this system cyanides depending on their composition are completely or largely decomposed and disintegrated in the same treatment.

## Claims

1. Device for removing one or more pollutions from a bulk material comprising:
- a treatment chamber for treating polluted bulk material therein,
- supply means for supplying bulk material to the treatment chamber,
- discharge means for discharging bulk material from the treatment chamber, the supply and discharge means each comprising a rotatable, substantially helical body, the helical body containing a hollow axle,
- evacuating means for evacuating the treatment chamber,
- heating means for heating the bulk material in the treatment chamber,
**characterized in that**
the device is mobile and contains a heating unit, an evacuation unit, a treatment chamber unit, an energy generating unit, an hydraulic unit, a process control unit, and a cooling unit, the units being mutually operatively connectable,
the heating unit contains the heating means, which are formed by a thermal oil-fired boiler, a thermal oil pump and an expansion tank,
the treatment chamber unit contains the treatment chamber, which is formed by three rows of a number of adjacently situated double-walled pipes, which rows are placed above one another, each pipe containing a screw conveyor for conveying the bulk material in a conveyance direction, the conveyance direction of the screw conveyors belonging to one row of pipes being mutually the same, and the conveyance direction of the screw conveyors belonging to the middle row of pipes being opposite to the conveyance direction of the screw conveyors belonging to the other row of pipes, a crushing mill being provided at the end of the first row of pipes and a pulverizing mill being provided at the end of the second row of pipes as seen in the conveyance direction, the treatment chamber further being provided with a filter unit and a condenser unit which are connected to the end of the third row of pipes, and the screw conveyors being driven by a hydraulic unit.

2. Device according to claim 1, **characterized in that** the supply means contain an alternating working supply system with two alternating closable supply bunkers.

3. Device according to claim 2, **characterized in that** each of the supply bunkers is provided with detectors for the level of the bulk material.

4. Device according to claim 2 or 3, **characterized in that** the supply bunkers are closable by means of a pivotable stop valve which can be moved by two pairs of cylinders situated opposite one another.

5. Device according to claim 1, **characterized in that** the filter unit contains an upright filter casing with a cross-section that increases from bottom to top and with baffle plates for filtering the gasses that are conveyed to the condenser unit.

6. Device according to claim 1, **characterized in that** each of the screw conveyors is provided with a hollow axle, and that the hollow axle of each screw conveyor and of each double walled pipe the space between the double walls is connected to the heating unit for conveying oil in a direction opposite to the conveyance direction.

7. Device according to claim 1, **characterized in that** the evacuation unit contains at least one evacuation pump.

8. Device according to claim 7, **characterized in that** the evacuation unit contains two evacuation pumps.

9. Device according to claim 1, **characterized in that** the number of pipes in each row is ten, and the hydraulic unit contains five hydro engines, each hydro engine driving six screw conveyors, two in each row, the pairs of screw conveyors driven by one hydro engine being situated above one another.

10. Device according to claim 1, **characterized in that** the energy generating unit comprises a diesel aggregate, a compressor, a hydraulic pump unit and a generator.

11. Device according to claim 11, **characterized in that** the cooling unit is provided with several heat exchange units.

12. Device according to claim 11, **characterized in that** the process control unit is suitable for regulating the temperature of the oil, for regulating the evacuation level, for regulating the rotation speed of the screw conveyors, for regulating the adjustment of the level detectors for the bulk material and for regulating the heat exchange unit.

13. Device according to claim 12, **characterized in that** the process control unit is remote controllable.

14. Device according to any one of the preceding claims, **characterized in that** the heating unit, the evacuation unit and the treatment chamber unit can be placed on one trailer, and other units can be placed on another trailer.
